# EUROPEAN PATENT APPLICATION

(11) **EP 4 813 530 A1**
(43) Date of publication of application: **30.09.2026**
(21) Application number: 26167003.8
(22) Date of filing: 24.03.2026
(51) Int. Cl.: B08B 15/04, B23Q 11/00

(54) **SHAVINGS EXTRACTION HOOD**

(30) Priority: 24.03.2025 IT 202500005970
(71) Applicant: SCM Group S.p.A., 47921 Rimini (RN) (IT)
(72) Inventor: SAVORELLI, Livio, 47921 Rimini (RN) (IT); ROSSINI, Roberto, 47921 Rimini (RN) (IT); MARINI, Christian, 47921 Rimini (RN) (IT); FIORENTINI, Luca, 47921 Rimini (RN) (IT); BATTAZZA, Marco, 47921 Rimini (RN) (IT); VILLA, Matteo, 47921 Rimini (RN) (IT)
(74) Representative: Gallo, Gianluca

(57) **Abstract**

Described is a shavings extraction hood (3) comprising a top opening (31); a bottom opening (32) having a perimeter; and a wall (33) extending between the top opening (31) and the bottom opening (32), so as to define a suction chamber, wherein the wall (33) comprises a bottom portion (332) disposed at, and defining, the bottom opening (32), the bottom portion (332) being movable between a maximum position, wherein the bottom opening (32) has a maximum perimeter, and a minimum position, wherein the bottom opening (32) has a minimum perimeter, less than the maximum perimeter.

## Description

The present invention relates to a machine for machining a piece of wood, or similar materials such as, for example, wood derivatives, metal, plastic and composite materials, and to a shavings extraction hood for extracting the shavings produced by the machine.

More precisely, the present invention relates to a CNC (Computer Numerical Control) machining centre, hereinafter also referred to in short as MC, and a shavings extraction hood for extracting the shavings produced by the MC during the machining of a part such as, for example, a panel or a prismatic element.

As is known, the MCs can have a so-called "continuous" or "multifunction" work table to support the panel to be machined, a vacuum pump fluid dynamically connected to the work table to lock the panel to be machined on the work table, and a sacrificial panel placed between the work table and the panel to be machined. Further, the MCs can have a so-called "bar" surface characterised by a system for locking the part to be machined by means of, for example, grippers or suction cups coupled on bars, which are disposed parallel to each other. The shavings extraction hood, which is also an object of the present invention, could be applied to machines for machining a part having different types of work tables, while always remaining within the scope of protection defined by the appended claims.

The MCs can also have a movable machining unit, typically along three Cartesian axes that define the X, Y and Z axes of the MC. The machining unit typically comprises a spindle configured for supporting and rotating a tool. The term "supporting" means that the tool is coupled, for example removably, to the spindle via a mechanical interface. The tool, rotating by means of the spindle (for example, an electro-spindle), can perform machining operations for extraction of shavings on the part to be machined. In addition to the tools, the spindle can support tool units such as, for example, angle drives, saw assemblies or other machining means that are more complex, and often more bulky, than a tool.

In the following description, reference will mainly be made to a tool coupled to the spindle. However, it should be noted that, as mentioned above, the spindle can support, in a perfectly interchangeable manner, a tool or a tool unit.

The tool can be movable with respect to the multifunction table according to one or more rotary axes, for example, two rotary axes named B and C. In this particular case, the tool is movable overall, with respect to the work table, according to five axes: three Cartesian axes (X, Y, Z) and two rotary axes (B, C).

In order to extract the shavings produced by the tool during the machining of the panel, the machining unit comprises a suction system which in turn comprises a hood, or canopy, for extraction of the shavings. During its operation, the hood is disposed near to or in contact with the work table, so as to completely surround the tool during the machining and create a suction chamber of the shavings produced by the tool itself. The aim of the hood is to intercept and capture the shavings ejected by the tool, so as to block them and contain them inside. The suction chamber is fluid dynamically connected to a source of negative pressure, for example, a centrifugal pump, so that a negative pressure is generated inside it. The fluid-dynamic connection is typically made through a tube (or conduit), for example a corrugated plastic hose or a rigid, smooth metal pipe. By means of the negative pressure present inside the hood, that is, of the suction chamber, the shavings generated by the tool are sucked and extracted by means of the tube that places the hood in fluid dynamic communication with the source of negative pressure.

In order to guarantee a flexible use of the MC, it can be provided both with large tools (for example, for contour machining) and small tools (for example, for drilling or sectioning/nesting machining operations). Also, as mentioned, the spindle can be rotated about two rotary axes. The overall size of the machining unit therefore varies according to the desired machining operation, in particular the working configuration, more specifically the arrangement of the machining unit and/or of the tool size, and it can also be very large. For this reason, as they must completely surround the tool and, often, the entire machining unit, the shavings extraction hoods of the MCs typically have large dimensions, so as to be suitable for every type of machining operation, that is, for every type of work configuration.

Patent application EP 3427895 A2 shows in Figure 1 an example of a shavings extraction system according to the prior art, wherein an extraction hood is provided that can be associated with a spindle disposed to support in rotation a tool for machining a part made of wood or similar material. The spindle is in turn rotatable about a first axis of rotation and a second axis of rotation and can be moved by supporting means substantially parallel to the three Cartesian axes. It is evident that the prior art suction system is inefficient. In fact, in order to be able to adapt to every type of machining operation and configuration adopted by the tool, the hood present in the prior art suction system has a suction chamber with large dimensions. For this reason, the negative pressure present inside it for the suction and extraction of the shavings may be insufficient, unless a very large quantity of energy is used for generating a very strong negative pressure. In addition to being economically disadvantageous, a very strong negative pressure inside the hood could, in any case, interfere with the panel to be machined, making it less stable on the multifunction work table. Furthermore, a very strong negative pressure inside the hood could interfere with the parts during machining, which might move, compromising the final quality of the part itself. On the other hand, the inefficiency of the suction system leads to the presence of shavings (dirt) on the panel to be machined and, in particular, on the finished parts. Wood shavings, like the residues of other machined materials, can be harmful for individuals, dangerous for the surrounding environment and cause accidents (wood shavings are, for example, highly flammable). For this reason, it is risky not to correctly collect, suck and extract the shavings generated during the machining step. In addition, the shavings could damage the so-called "aesthetic" surface of the finished parts, especially if automatic means are used to unload the parts themselves. This shortcoming is greater if tools with small dimensions are used, such as, for example, cutters for nesting (or sectioning).

Further, patent application EP 3427895 A2 shows, in Figure 3, hoods dedicated to the desired type of machining. The various extraction hoods suitable for the various machining operations are changed each time the tool is changed. It is clear that having to continuously change the extraction hood according to the tool used is an onerous task for the operator, and it adversely affects the productivity of the MC.

In order to improve the extraction of the shavings, the MC technology also seeks to make the extraction hood as small as possible. For example, with references to Figures 5 or 6 of patent application EP 3427895 A2, the bottom suction opening is disposed as close as possible to the tool. The extraction hoods used in this case are mainly linked to a particular size of the tool and cannot therefore be used with the tools and units with large dimensions. In this case, however, the flexibility of the MC is lost, which will be able to carry out a very limited series of operations on the panel to be machined.

The aim of the present invention is to provide a shavings extraction hood and a machine for machining a part that overcome the drawbacks of the above-mentioned prior art.

In particular, an aim of the present invention to provide a shavings extraction hood and a machine for machining a part which are capable of being more efficient, with the same energy consumption, while guaranteeing the maximum flexibility of the machining operations that can be carried out by the machine.

Another aim of the present invention is to provide a shavings extraction hood and a machine for machining a part which consume less energy, with the same efficiency, while guaranteeing the maximum flexibility of the machining operations that can be carried out by the machine.

Further, an aim of the present invention to provide a shavings extraction hood and a machine for machining a part which are capable of adapting the relative efficiency according to the machining operation being carried out.

Said aim is fully achieved by the shavings extraction hood and a machine for machining a part according to the present invention, as characterised in the accompanying claims.

The present invention provides a shavings extraction hood. In particular, the shavings extraction hood comprises a top opening, a bottom opening having a perimeter, and a wall extending between the top opening and the bottom opening, so as to define a suction chamber. In particular, the wall comprises a bottom portion disposed at, and defining, the bottom opening. The bottom portion is movable between a maximum position, wherein the bottom opening has a maximum perimeter, and a minimum position, wherein the bottom opening has a minimum perimeter, less than the maximum perimeter.

Advantageously, the bottom portion may comprise two or more elements, wherein the elements are disposed adjacent to each other along the perimeter of the bottom opening, so as to define the bottom opening. Further, the elements may be movable relative to each other, so that the bottom portion is movable between the maximum position and the minimum position.

More advantageously, each element may have one or more overlapping surfaces, in particular two overlapping surfaces. The elements can be partially overlapped with each other, along the perimeter of the bottom opening, at the overlapping surfaces.

Further, the hood may comprise an actuating system coupled to at least one element and configured to move the at least one element. The motion of the at least one element coupled to the actuating system can be transmitted to all the elements via the overlapping surfaces of the elements.

Further, the perimeter of the bottom opening may lie on a bottom opening plane, and the elements may be movable in rotation about an axis of rotation, in particular parallel to the bottom opening plane, so that the bottom portion is movable between the maximum position and the minimum position.

In particular, the hood may comprise an actuating system configured to rotate the elements about the axis of rotation. The actuating system may comprise an adjusting actuator having a linear motion, and a motion transmission system configured to convert the linear motion of the adjusting actuator into a rotational motion.

More specifically, the perimeter of the bottom opening may lie on a bottom opening plane. The elements may be flexible, and the elements may be movable by bending towards a central axis that is perpendicular to the bottom opening plane, so that the bottom portion is movable between the maximum position and the minimum position.

Advantageously, the hood may comprise an actuating system configured to bend the elements towards the central axis. The elements can have an elastic component and, when the actuating system acts on the elements, the elements can bend towards the central axis, and when the actuating system does not act on the elements, the elements can move away from the central axis as a function of the elastic component.

More advantageously, the actuating system may comprise a cable, disposed around the elements and having a length, and an adjusting actuator configured to reduce the length of the cable disposed around the elements, so as to bend the elements towards the central axis, and increase the length of the cable, so that the elements move away from the central axis as a function of the elastic component.

The present invention also provides a machine for machining a part. The machine comprises a work table, configured to support and lock the part to be machined, and a machining unit, configured to machine the part. In particular, the machining unit comprises a spindle, configured to support and rotate a tool, and a suction system, configured to extract the shavings produced by the tool during the machining of the part. More specifically, the suction system comprises a shavings extraction hood as described in the present invention.

These and other features of the invention will become more apparent from the following detailed description of a preferred, non-limiting example embodiment of it, with reference to the accompanying drawings, in which:
- Figure 1 illustrates a perspective view of a machine for machining a part according to the invention;
- Figure 2 illustrates a side view of a first embodiment and a first configuration of a hood according to the invention;
- Figure 3 illustrates a side view of the first embodiment in a second configuration of the hood according to the invention;
- Figure 4a illustrates a side view of a detail of the hood according to the invention in the first embodiment and in the first configuration;
- Figure 4b illustrates a side view of a detail of the hood according to the invention in the first embodiment and in the second configuration;
- Figure 5a illustrates a perspective view of a detail of the hood according to the invention in a second embodiment and in the first configuration;
- Figure 5b illustrates a perspective view of a detail of the hood according to the invention in the second embodiment and in the second configuration;
- Figure 6 illustrates a side view of a detail of the hood according to the invention in a third embodiment and in the first configuration; and
- Figure 7 illustrates a side view of a detail of the hood according to the invention in the third embodiment and in the second configuration. Moreover, the directional terminology, such as "right", "left", "front", "rear", "base", "top", "upper", "bottom", "side", etc., is used below with reference to the accompanying drawings. Since components and/or elements and/or embodiments of this invention may be disposed and/or made to operate in various different orientations, the directional terminology is used purely by way of a non-limiting example.

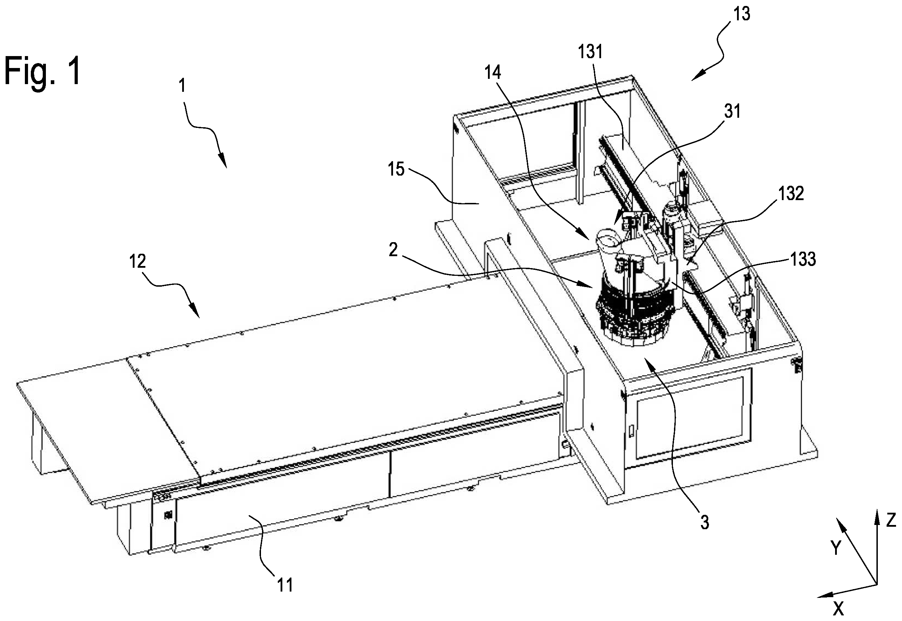

Figure 1 shows a machine 1 for machining a part, in particular an MC. The machine 1 has a base 11 which has the aim of supporting all the fixed and movable parts of the machine 1.

A work table 12 of the "multifunction" type, made, for example, of aluminium is coupled on the base 11. The work table 12 is horizontal, that is, it is substantially parallel to the supporting surface of the base 11, and extends along a longitudinal axis X and along a transversal axis Y. However, it should be noted that the work table 12 could also be vertical or inclined (always with reference to the supporting surface of the base 11), while remaining within the scope of protection defined by the appended claims. The aim of the work table 12 is to support the part to be machined. Further, the aim of the work table 12 is to lock the part during he operations for machining the part. For this purpose, the work table 12 can have holes, which can be suitably opened or closed, and which are fluid dynamically connected, or coupled, to a vacuum pump, more particularly, a volumetric pump. Further, the work table 12 may have grooves for the insertion of appropriate seals that act in conjunction with the holes in order to define the areas of the work table 12 subject to the negative pressure. On the work table there may be a so-called "sacrificial" panel that has the aim of preserving the work table 12 during the passing operations carried out on the part. The "sacrificial" panel can be made, for example, of MDF, and is, therefore, breathable in air. The part is, therefore, retained by the negative pressure generated by the vacuum pump and passing through the "sacrificial" panel.

A movement system 13 is coupled to the base 11 with the aim of moving a tool for machining the part along three orthogonal axes (Cartesian axes). In particular, the movement system 13 can comprise a crosspiece 131 that extends along the transversal axis Y and is coupled in a slidable manner to the base 11, so as to be able to move, by means of a first actuator (for example, a brushless synchronous electric motor, or another type of actuator, not shown in the drawings), along the longitudinal axis X, above the work table 12. Further, the movement system 13 comprises a transversal carriage 132 coupled in a slidable manner to the crosspiece 131, so as to be able to move, by means of a second actuator (for example, a brushless synchronous electric motor, or another type of actuator), along the transversal axis Y orthogonal to the longitudinal axis X. In addition, the movement system 13 may comprise a vertical carriage 133 coupled in a slidable manner to the transversal carriage 132, so as to be able to move, by means of a third actuator (for example, a brushless synchronous electric motor, or another type of actuator) along the vertical axis Z orthogonal to the longitudinal axis X and to the transversal axis Y. The machine 1 comprises a machining unit 14 coupled to the vertical carriage 133. The machining unit comprises a spindle, in particular, an electro-spindle, in order to support and rotate a tool for machining the part. The tool can therefore be moved, in use, on the work table 12, along a set of three Cartesian axes, in particular, along the longitudinal axis X, the transversal axis Y and the vertical axis Z. In addition, the machining unit 14 can have one or more axes of rotation, for example, a first axis of rotation and a second axis of rotation, so that the tool can be moved overall along five axes: three linear and two rotary.

The movement system 13 and the machining unit 14 can be enclosed inside a panel 15, as shown, for example, in Figure 1. The panel 15 has a safety function. In fact, the panel 15 can incorporate safety systems (for example, contact or non-contact sensors) to detect any impact of the movable parts of the machine 1 with an operator. Further, the aim of the panel 15 is to prevent the operator from approaching the moving parts of machine 1 or dangerous components, such as the spindle or the tool. The aim of the panel 15 is also to intercept any parts of the machine 1, for example the plates of the tool, that may accidentally detach and be ejected at high speed towards an operator. The panel 15 can be coupled to the movement system 13 and can be moved together with it, for example, along the longitudinal axis X.

The machining unit 14 comprises a suction system 2 for extracting the shavings produced by the tool during the machining of the part. The suction system 2 can move together with the spindle and, therefore, is movable along the three orthogonal axes, in particular, the longitudinal axis X, the transversal axis Y and the vertical axis Z.

The suction system 2 may comprise a shavings extraction hood 3. The shavings extraction hood 3 may comprise a top opening 31. The top opening 31 may be fluid dynamically connected to a source of negative pressure, for example, through a conduit or tube. The source of negative pressure may be, for example, a vacuum pump, in particular, a centrifugal pump (or impeller). Typically, the centrifugal pump does not form part of the machine 1, but can be part of an external suction system. The top opening 31 may have various shapes, for example, rectangular or circular, and be parallel to the work table 12. However, the top opening could also be, for example, orthogonal to the work table 12, or have different inclinations, without thereby departing from the scope of protection defined by the claims attached hereto.

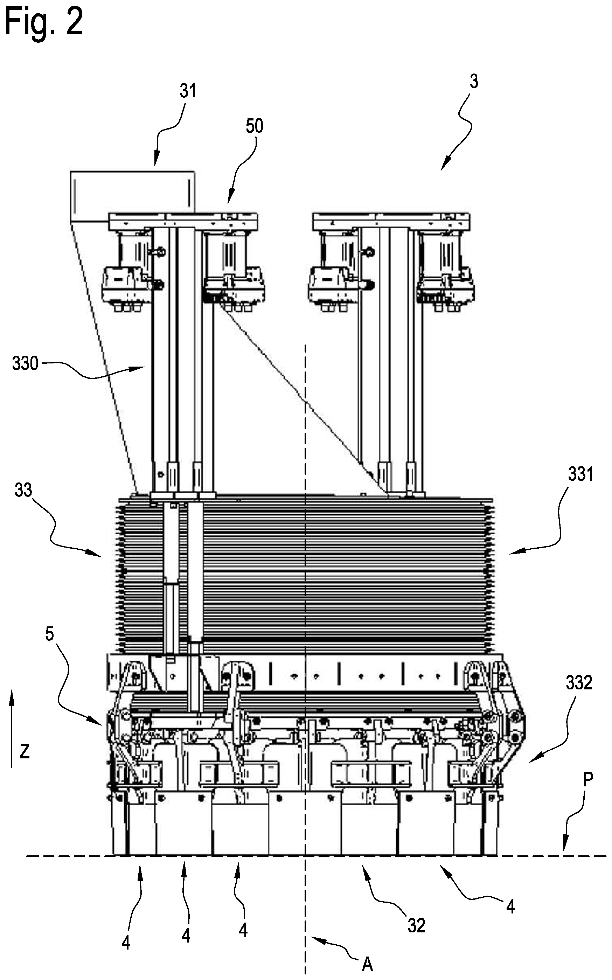

With particular reference to Figure 2, the shavings extraction hood 3 comprises a bottom opening 32 facing the work table 12. Like the top opening 31, the bottom opening 32 may also have various shapes (for example, rectangular or circular) and be, for example, parallel to the work table 12. In particular, the bottom opening 32 allows the tool to freely access the part to be machined. The bottom opening 32 has a perimeter. Further, the bottom opening 32 may lie on a bottom opening plane P. In particular, the perimeter of the bottom opening 32 may lie on the bottom opening plane P. Preferably, the bottom opening plane P may be parallel to the work table 12.

The terms "top" and "bottom" are not limited to the geometric-spatial interpretation suggested by the examples shown in the various drawings attached hereto.

With particular reference to Figure 2, the shavings extraction hood 3 comprises a wall 33. The wall 33 extends between the top opening 31 and the bottom opening 32. The shape and the dimensions of the wall 33 are such that it can surround the spindle, or at least a portion thereof, and any tool, or at least a portion thereof, so as to intercept, suck and extract the shavings produced by the tool during the machining of the part. The term "surround" generally means "to encircle" or "to limit all around" an object. The wall 33, the top opening 31 and the bottom opening 32 define a suction chamber. The suction chamber can, therefore, be in fluid dynamic connection with the source of negative pressure and, for this reason, can be subject to a negative pressure with the aim of capturing the shavings generated by the tool during the machining of the part, suck them and extract them towards the outside of the machine 1, into a shavings collection and storage area.

The savings extraction hood 3 and, in particular, the wall 33, can be movable, with respect to the spindle, along an operating axis, towards and away from the work table 12, that is, from the part to be machined. The operating axis may be, for example, parallel to the vertical axis Z, and may be, in particular, perpendicular to the work table 12. The hood 3, when it is raised relative to the work table 12, is in a non-operating position, while, when it is lowered relative to the work table 12, it is in an operating position. For this purpose, the wall 33 may comprise a bellows portion 331, which is extended when hood 3 is in the operating position, and retracted when hood 3 is in the non-operating position. The movement of the wall 33 and, in particular, of the bellows portion 331 along the operating axis can be achieved by means of a main actuator 330. The main actuator 330 may be, for example, an electric motor or a piston. In order to guide the movement of the wall 33. When the hood 3 is in the operating position, the wall 33 and the opening 32 can be operatively in contact with the part to be machined, closing the suction chamber at the bottom by means of the part itself. In this configuration, the tool can machine the part, while the hood 3, and in particular the wall 33, can intercept, suck and extract the shavings produced by the machining operations.

The terms "lifted" and "lowered" must be interpreted with reference to the movements, respectively, of "moving away from" and "approaching" the work table 12.

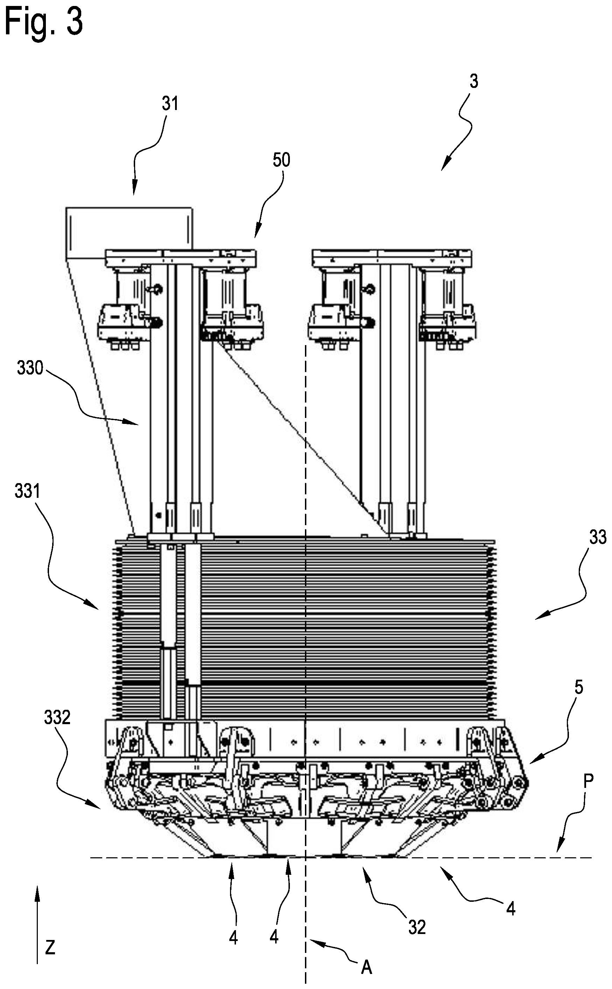

The wall 33 comprises a bottom portion 332 facing the work table 12. In particular, the bottom portion 332 is disposed at the bottom opening 32. More specifically, the bottom portion 332 defines the bottom opening 32 itself. Further, the bottom wall 332 defines the perimeter, that is, the surround, of the bottom opening 32. The bottom portion 332 is movable between a maximum position and a minimum position, and vice versa. Figure 2 shows the bottom portion 332 in its maximum position. When the bottom portion 332 is in the maximum position, the bottom opening 32 has a maximum perimeter. In this configuration, the hood 3 defines a suction chamber with large dimensions, suitable, for example, to contain, for example, the spindle oriented according to a plurality of positions, and provided with tools or units with large dimensions. Figure 3 shows the bottom portion 332 in its minimum position. When the bottom portion 332 is in the minimum position, the bottom opening 32 has a minimum perimeter. The minimum perimeter is less than the maximum perimeter, that is, the perimeter of the bottom opening 32. In this configuration, the hood 3 defines a suction chamber with smaller dimensions with respect to the previous configuration, which is suitable, for example, for containing the spindle oriented with the axis of rotation perpendicular to work table 12, and provided with tools or units of reduced dimensions. In the latter configuration, despite the geometric limits described above, the hood 3 is optimised from the point of view of the suction since, with the same negative pressure, a suction chamber with smaller dimensions is more efficient for the suction and extraction of the shavings.

With particular reference to Figures 1 and 2, the bottom portion 332 comprises two or more elements 4, that is, a plurality of elements 4. The elements 4 are disposed, along the perimeter of the bottom opening 32, adjacent to each other. The elements 4 face the work table 12 and define the bottom opening 32 and, in particular, the relative perimeter. The elements 4 are movable, in particular with respect to one another. More specifically, the elements 4 are movable in a coordinated manner and can, for example, all be moved simultaneously. By means of the motion of the elements 4, the bottom portion 332 moves between the maximum position and the minimum position, and vice versa. This feature is particularly advantageous because the plurality of elements 4 simplifies the movement of the bottom portion 332. The elements 4 can be overlapped on each other along the perimeter of the bottom opening 32. In particular, each element 4 may have one or more overlapping surfaces. The elements 4 are overlapped on one another at the overlapping surfaces. The overlapping of the elements 4 allows a continuous bottom wall 332 to be achieved despite the movement of the elements 4 themselves. This feature is particularly advantageous when having to construct a suction chamber and, in particular, a part 33 which isolates the suction chamber from the outside environment.

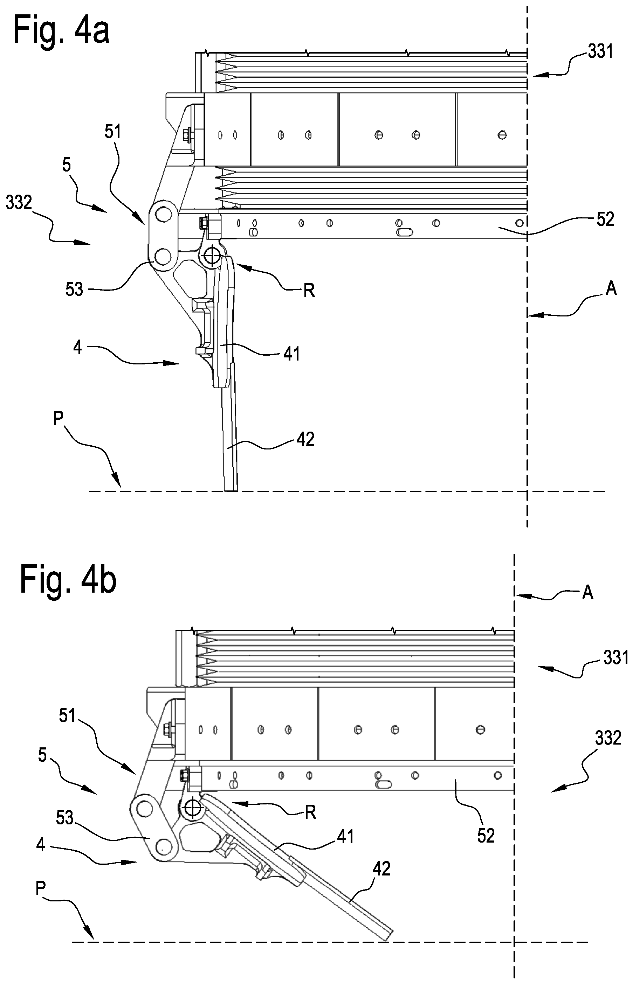

With particular references to Figures 1 and 2, the hood 3 may comprise an actuating system 5. The actuating system 5 comprises an adjusting actuator 50. The adjusting actuator 50 may be, for example, an electric motor or a piston. Further, the actuating system 5 may comprise a motion transmission system 51. The motion transmission system 51 may be coupled to the adjusting actuator 50 and to one or more of the elements 4. The motion transmission system 51 is configured for transmitting the motion of the adjusting actuator 50 to the elements 4. In particular, if the elements 4 are overlapped on each other, it is possible to transmit the motion of the adjusting actuator 50 to one or more of the elements 4 so as to move all the elements 4 via the overlapping surfaces of elements 4. With particular reference to Figures 4a and 4b, the elements 4 may have a rigid portion 41 and/or a flexible portion 42. The flexible portion may be made, for example, of rubber or by means of brushes. The rigid portion 41 may be made, for example, of metal.

The elements 4 can be rotated about an axis of rotation R. The axis of rotation R can be parallel to the bottom opening plane P. In particular, according to a view perpendicular to the bottom opening plane P, the axis of rotation R can be substantially tangential to the perimeter of the bottom opening 32.

With particular reference to Figure 4a, the elements 4 are substantially perpendicular to the bottom opening plane P. In this case, the bottom portion 332 is at its maximum position and the bottom opening 32 has the maximum perimeter.

With particular reference to Figure 4b, the elements 4 are rotated about the axis of rotation R and are substantially inclined, with respect to the bottom opening plane P, towards the inside of the bottom opening 32. In this case, the bottom portion 332 is in the minimum position and the bottom opening 32 has the minimum perimeter.

According to the embodiment shown in Figures 2, 3, 4a and 4b, the elements 4 are rotated about the axis of rotation R by means of the actuating system 5. The actuating system 5 comprises an adjusting actuator 50 achieved by means of a piston. Further, the actuating system 5 comprises a motion transmission system 51, similar to a four-bar linkage, formed by means of a support 52, to which the elements 4 are coupled, and a lever system 53. The linear motion of the piston is converted into a rotational motion that allows the elements 4 to rotate about the axis of rotation R.

Obviously, the bottom portion 332 can adopt infinite intermediate positions between the maximum position and the minimum position.

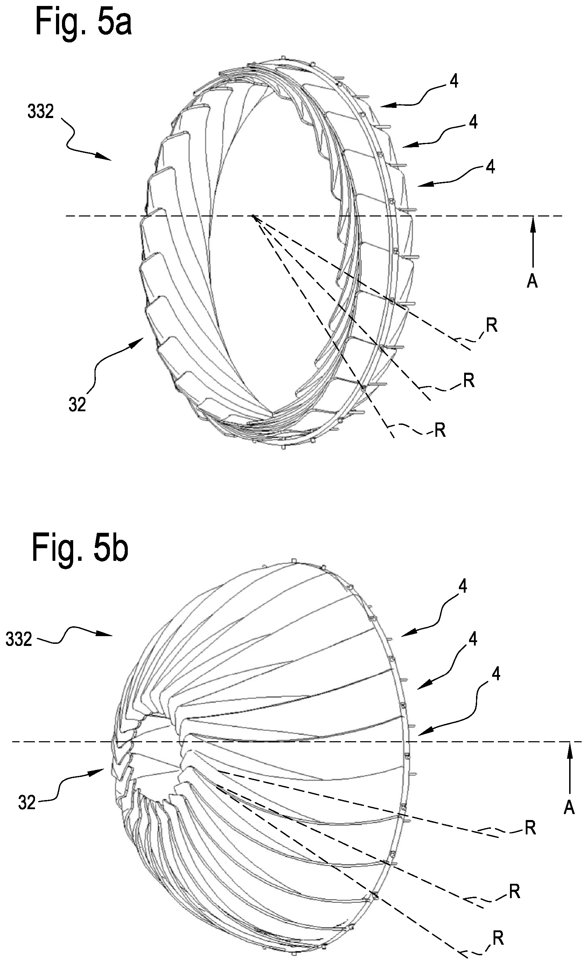

Figures 5a and 5b show a further embodiment wherein the elements 4 can be rotated about an axis of rotation R. The axis of rotation R is parallel to the bottom opening plane P. In particular, according to a view perpendicular to the bottom opening plane P, the axis of rotation R is substantially radial with respect to the perimeter of the bottom opening 32. With particular reference to Figure 5a, the bottom portion 332 is in the maximum position and the bottom opening 32 has the maximum perimeter.

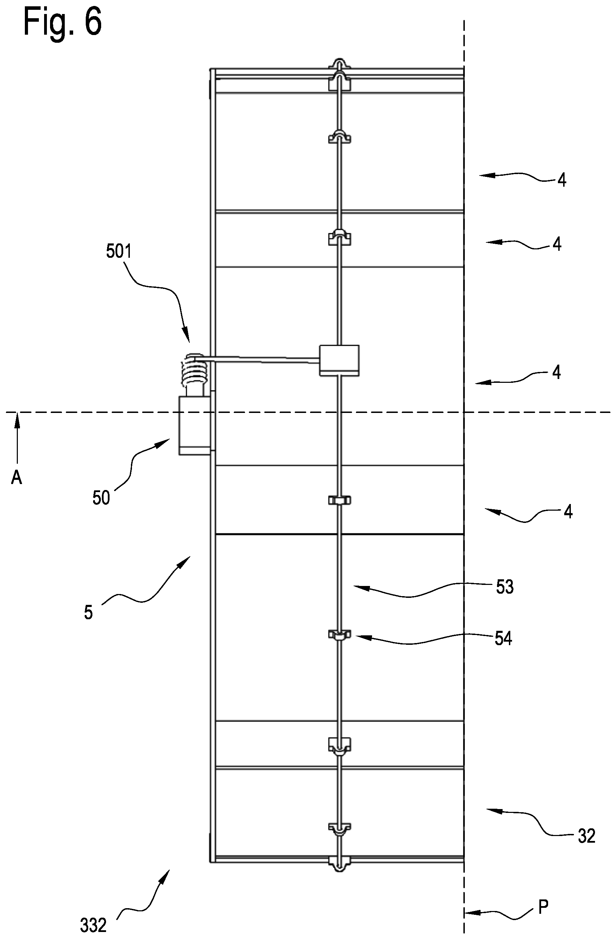

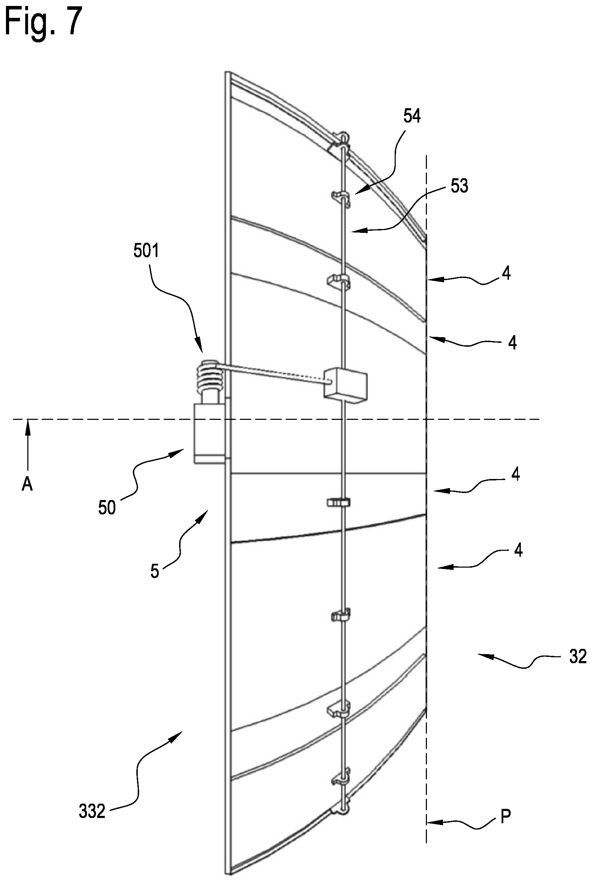

With particular reference to Figure 5b, the bottom portion 332 is in its minimum position and the bottom opening 32 has the minimum perimeter. Also in this case, the bottom portion 332 can adopt infinite intermediate positions between the maximum position and the minimum position. Figures 6 and 7 show a further embodiment of the shavings extraction hood 3. In particular, the elements 4 are flexible. Further, the elements 4 are movable by bending towards the centre of the bottom opening 32. More specifically, the elements 4 can bend towards a central axis A of the bottom opening 32, perpendicular to bottom opening plane P; the central axis A passing through the centre of the bottom opening 32.

With particular reference to Figure 6, the elements 4 are substantially perpendicular to the bottom opening plane P. In this case, the bottom portion 332 is at its maximum position and the bottom opening 32 has the maximum perimeter.

With particular reference to Figure 7, the elements 4 are bent, that is, curved, towards the centre of the bottom opening 32. In this case, the bottom portion 332 is in the minimum position and the bottom opening 32 has the minimum perimeter.

According to the embodiment shown in Figures 6 and 7, the elements 4 are bent towards the centre of the bottom opening 32 by means of the actuating system 5. The actuating system 5 comprises an adjusting actuator 50 achieved by means of an electric motor. In particular, the electric motor 50 is configured to rotate a spool 501 which carries a cable. Further, the actuating system 5 comprises a cable 53, disposed around the elements 4. In particular, the cable 53 is coupled to one or more elements by means of a cable gland 54.

The adjusting actuator 50, that is, the electric motor, is configured to wind or unwind the cable 53 on the spool 501.

With particular reference to Figure 6, the cable 53 winds around the elements 4 without, however, acting on them. The elements 4 are therefore substantially perpendicular to the bottom opening plane P. In this case, the cable 53 has a maximum length.

With particular reference to Figure 7, when the electric motor 50 is driven according to a direction of rotation necessary for winding the cable 53 on the spool 501, the cable 53 is wound on the spool 501 and its length decreases, with respect to the maximum length, to a minimum length. For this reason, the cable acts on the elements 4, tightening them and causing them to bend towards the centre of the bottom opening 32. This leads to movement of the bottom portion 332 which passes from the maximum position to the minimum position.

When the electric motor 50 is driven in a direction of rotation necessary for unwinding the cable 53 from the spool 501, the cable 53 is unwound from the spool 501 and its length increases from the minimum length to the maximum length. For this reason, the cable stops acting on the elements 4, which are free to return to their original position, that is, substantially perpendicular to the bottom opening plane P. This causes the movement of the bottom portion 332 which passes from the minimum position to the maximum position.

Also in this case, the bottom portion 332 can adopt infinite intermediate positions between the maximum position and the minimum position.

In order to facilitate the return of elements 4 to their original (maximum) position, the elements 4 can advantageously have an elastic component, that acts as a force opposing the bending action imposed by the cable 53 on the elements 4.

Further, in order to facilitate the return of the elements 4 to their original (maximum) position, the cable 53 can have a certain degree of rigidity that enables it to exert both a "pulling" and a "pushing" action, as if it were a rod or a semi-rigid member.

The present invention is described by way of example only, without limiting the scope of application, according to its preferred embodiments, but it shall be understood that the invention may be modified and/or adapted by experts in the field without thereby departing from the scope of the inventive concept, as defined in the claims herein.

## Claims

1. A shavings extraction hood (3), comprising:
- a top opening (31);
- a bottom opening (32) having a perimeter; and
- a wall (33) which extends between the top opening (31) and the bottom opening (32) so as to define a suction chamber,
wherein the wall (33) comprises a bottom portion (332) disposed at, and defining, the bottom opening (32), the bottom portion (332) being movable between a maximum position, where the bottom opening (32) has a maximum perimeter, and a minimum position, where the bottom opening (32) has a minimum perimeter, smaller than the maximum perimeter.

2. The shavings extraction hood (3) according to claim 1, wherein the bottom portion (332) comprises two or more elements (4), wherein the elements (4) are disposed adjacent to each other along the perimeter of the bottom opening (32), so as to define the bottom opening (32), and wherein the elements (4) are movable relative to each other so that the bottom portion (332) is movable between the maximum position and the minimum position.

3. The shavings extraction hood (3) according to the preceding claim, wherein each element (4) has one or more overlapping surfaces, and wherein the elements (4) are partly overlapped along the perimeter of the bottom opening (32) at the overlapping surfaces.

4. The shavings extraction hood (3) according to the preceding claim, comprising an actuating system (5) coupled to at least one element (4) and configured to move the at least one element (4), wherein the motion of the at least one element (4) coupled to the actuating system (5) is transmitted to all the elements (4) via the overlapping surfaces of the elements (4).

5. The shavings extraction hood (3) according to any one of claims 2 to 4, wherein the perimeter of the bottom opening (32) lies in a bottom opening plane (P), and wherein the elements are movable in rotation about a rotation axis (R), in particular parallel to the bottom opening plane (P), so that the bottom portion (332) is movable between the maximum position and the minimum position.

6. The shavings extraction hood (3) according to the preceding claim, comprising an actuating system (5) configured to rotate the elements (4) about the rotation axis (R), wherein the actuating system (5) comprises an adjusting actuator (50) having linear motion, and a motion transmission system (51) configured to convert the linear motion of the adjusting actuator (50) into rotational motion.

7. The shavings extraction hood (3) according to any one of claims 2 to 4, wherein the perimeter of the bottom opening (32) lies in a bottom opening plane (P), wherein the elements (4) are flexible, and wherein the elements (4) are movable by bending towards a central axis (A) perpendicular to the bottom opening plane (P), so that the bottom portion (332) is movable between the maximum position and the minimum position.

8. The shavings extraction hood (3) according to the preceding claim, comprising an actuating system (5) configured to bend the elements (4) towards the central axis (A), wherein the elements (4) have an elastic component, and wherein, when the actuating system (5) operates on the elements (4), the elements (4) bend towards the central axis (A), and when the actuating system (5) does not operate on the elements (4), the elements (4) move away from the central axis (A) as a function of the elastic component.

9. The shavings extraction hood (3) according to the preceding claim, wherein the actuating system (5) comprises a cable (53), disposed around the elements (4) and having a length, and an adjusting actuator (50) configured to reduce the length of the cable (53) disposed around the elements (4), so as to bend the elements (4) towards the central axis (A), and increasing the length of the cable (53), so that the elements (4) move away from the central axis (A) as a function of the elastic component.

10. A machine (1) for machining a part, comprising:
- a work table (12) configured to support and hold down the part to be machined; and
- a machining unit (14), configured to machine the part;
wherein the machining unit (14) comprises:
- a spindle configured to support and rotate a tool; and
- a suction system (2) configured to extract the shavings produced by the tool during machining of the part,
wherein the suction system (2) comprises a shavings extraction hood (3) according to any one of the preceding claims.
